# FASCICULE DE BREVET EUROPEEN

(11) **EP 1 388 067 B1**
(45) Date de publication et mention de la délivrance du brevet: **20.11.2013**
(21) Numéro de dépôt: 02718269.0
(22) Date de dépôt: 18.03.2002
(51) Int. Cl.: G06F 21/72, G06F 12/14, G06F 7/58

(54) **COMPOSANT ELECTRONIQUE SECURISE**
VERSICHERTER ELEKTRONIKBAUSTEIN
SECURE ELECTRONIC COMPONENT

(30) Priorité: 23.03.2001 FR 0104058
(43) Date de publication de la demande: 11.02.2004
(73) Titulaire: Gemalto SA, 92190 Meudon (FR)
(72) Inventeur: RHELIMI, Alain, F-94230 Cachan (FR); BEN AMOR, Ghazi, F-75007 Paris (FR); GUIGNARD, Philippe, F-75008 Paris (FR)
(74) Mandataire: Cassagne, Philippe M.J.
(86) Numéro de dépôt international: PCT/FR2002/000945
(87) Numéro de publication internationale: WO 2002/077825

(56) Documents cités:
- EP-A- 0 924 600
- US-A- 5 805 712
- US-A- 5 818 939
- US-A- 5 963 104
- BELLIDO ET AL: "A simple binary random number generator: new approaches for CMOS VLSI" CIRCUITS AND SYSTEMS, 1992., PROCEEDINGS OF THE 35TH MIDWEST SYMPOSIUM ON WASHINGTON, DC, USA 9-12 AUG. 1992, NEW YORK, NY, USA,IEEE, US, 9 août 1992 (1992-08-09), pages 127-129, XP010057783 ISBN: 0-7803-0510-8

## Description

La présente invention concerne un composant électronique sécurisé. La présente invention concerne plus particulièrement un composant mettant en oeuvre un algorithme de cryptographie et une clé secrète correspondante, cette clé secrète étant générée directement par le composant lui-même.

Il existe aujourd'hui un besoin de composants et plus précisément de microcontrôleurs sécurisés aptes à chiffrer ou déchiffrer les données respectivement transmises ou reçues, à stocker lesdites données sous forme non directement accessibles ou encore à s'identifier à l'aide d'une clé publique. US-A-5 805 712 divulgue de tels composants.

Pour illustrer ces besoins en composants sécurisés aptes à chiffrer/déchiffrer les données échangées et stockées, on peut par exemple évoquer le problème du piratage des droits d'auteurs électroniques.

A la différence des contenus analogiques, tout contenu numérique est facilement copiable sans qu'il existe - de différence entre l'original et la copie. De plus, le développement des nouveaux moyens de communication et notamment l'Internet, permet de partager tout contenu numérique facilement et instantanément avec n'importe quelle personne dans le monde, d'où un piratage massif des droits d'auteurs. Les industries les plus touchées par cette fraude massive sont les éditeurs de logiciels, les maisons de disques, etc.

Pour éviter cette fraude, une parade consiste à chiffrer en utilisant un algorithme de cryptographie le contenu numérique de manière à ce que seule les personnes autorisées à y accéder et disposant de l'algorithme et de la clé de déchiffrement puisse le faire.

Pour illustrer encore ces besoins en composants sécurisés aptes à chiffrer/déchiffrer les données échangées et stockées, on peut également donner l'exemple d'un terminal de paiement électronique lecteur de cartes bancaires. Un tel terminal est classiquement muni d'un microcontrôleur formé d'une unité de calcul et d'une mémoire numérique dans laquelle il stocke : ses applications, ses paramètres d'authentification et de certification, les transactions réalisées, etc.

La modification des paramètres listés ci-dessus peut entraîner une fraude potentielle. Par exemple, un fraudeur ayant accès au microcontrôleur peut illégalement charger une application qui demandera le code d'identification (PIN) d'un porteur de carte à puce et rejouera la séquence de paiement pour réaliser une double transaction certifiée et non répudiable car signée avec un pin authentique. Un fraudeur peut également supprimer une transaction ou ne pas la traiter quand elle est réalisée par un porteur de carte particulier.

Pour protéger, l'accès au microcontrôleur, les fabricants de terminaux de paiement électronique se sont longtemps contentés de disposer des dispositifs de détection de l'ouverture du boîtier (de type switch) où est logé le microcontrôleur et à déclencher l'effacement des mémoires du microcontrôleur en cas de détection d'une ouverture dudit boîtier. Les limites d'une telle sécurisation apparaissent clairement.

Aujourd'hui donc, se développe le besoin de disposer de microcontrôleurs sécurisés, aptes à chiffrer ou déchiffrer les données respectivement transmises ou reçues et à stocker lesdites données sous forme chiffrée non directement accessibles.

Une première façon de réaliser de tels composants est par exemple d'implanter sur une même puce scellée, l'unité de calcul (le microprocesseur) et les différentes mémoires associées (RAM, ROM, EPROM, et.). L'accès frauduleux à ces mémoires ne peut alors se faire sans risque de détruire le composant et par le biais d'outils très sophistiqués hors de portée de la majorité des fraudeurs. Dans ce cas les algorithmes de chiffrement et les clés secrètes correspondantes servent essentiellement à échanger des données avec l'extérieur et authentifier les données échangées. Les cartes à puces et notamment les cartes de type SIM pour les téléphones GSM utilisent une telle solution. Cette solution a pour principal inconvénient d'être relativement limitée en taille mémoire.

Une seconde façon de faire est d'utiliser un microprocesseur et des mémoires distinctes reliées par un bus de données et de ne stocker dans lesdites mémoires que des informations préalablement chiffrées par ledit microprocesseur. Dans ce cas les algorithmes de chiffrement et les clés secrètes correspondantes servent non seulement aux échanges des données avec l'extérieur et authentifier les données échangées mais également à chiffrer les données mémorisées. Cette solution présente l'avantage de pouvoir utiliser des mémoires standards de tailles importantes.

Dans tous les cas, il apparaît donc nécessaire de disposer d'au moins un algorithme de chiffrement et d'une clé secrète de chiffrement dans la puce portant le microprocesseur.

En effet, les algorithmes de chiffrement utilisés, qui sont principalement de deux types : symétriques ou asymétriques, nécessitent tous des clés secrètes. Alors que les algorithmes symétriques, comme le DES (Data Encryption Standard), utilisent une seule et même clé secrète pour chiffrer et déchiffrer les messages, les algorithmes asymétriques utilisent des clés distinctes pour chiffrer et déchiffrer.

Un microprocesseur mettant en oeuvre un algorithme asymétrique dispose donc d'une paire de clés, cette paire étant obtenue à partir d'une clé sécrète, de façon que la clé de déchiffrement ne peut pas être déduite de la clé de chiffrement. La clé de chiffrement est rendue publique c'est à dire qu'elle est mise à la libre disposition d'une autorité de contrôle appropriée tandis que la clé de déchiffrement est gardée secrète dans le module. Toute personne ayant accès à la clé publique peut chiffrer un message à destination du module, seul toutefois le module peut déchiffrer le message par le truchement de sa clé secrète.

Un exemple d'algorithme asymétrique est l'algorithme RSA ainsi nommé d'après ses inventeurs Rivest, Shamir et Adleman.

Si les algorithmes symétriques (DES, etc.) sont particulièrement adaptés pour chiffrer des données à stocker dans une mémoire externe uniquement accessible par le seul microprocesseur, les algorithmes asymétriques (RSA, etc.) sont eux particulièrement adaptés pour échanger des messages avec l'extérieur puisqu'ils présentent l'avantage de ne pas communiquer la clé de déchiffrement qui reste secrète dans le module. La seule chose que le module doit communiquer est la clé publique.

Classiquement, l'implantation de la (ou des) clé(s) secrète(s) dans un composant sécurisé est opérée lors du processus de fabrication du composant à travers une opération dite de personnalisation du composant.

Chaque clé secrète est soit, gravée dans la puce soit, stockée dans une mémoire Flash interne, laquelle ne peut être accédée de l'extérieur sans détruire le composant électronique. Cette opération est dite personnalisation du composant. L'opération de personnalisation est réalisée par une machine comprenant un lecteur/encodeur dans lequel les données de personnalisation sont chargées et qui fonctionne de manière autonome grâce à un microprocesseur.

Les données personnalisées du composant et en particulier la clé secrète est fournie au lecteur/encodeur par un dispositif périphérique via un bus de communication associé à un dispositif de contrôle.

Cette personnalisation est relativement complexe. Pour tenir compte des aspects de sécurité, il est nécessaire d'assurer des fonctions supplémentaires telles que :
- le calcul de clés dites de transport pour débloquer le composant avant les opérations de personnalisation,
- le calcul d'une clé de session pour la sécurisation des données à introduire dans la carte et,
- le calcul d'un certificat qui autorise la création d'un répertoire ou d'un fichier.

Par ailleurs, une telle opération de personnalisation nécessite de concevoir dans l'usine de fabrication des composants une infrastructure de haute sécurité. La personnalisation ralentit de plus le temps de cycle de fabrication des composants puisqu'elle doit être effectuée individuellement sur chaque puce. De plus, dans le cas d'une clé devant être stockée dans une mémoire Flash, elle oblige le fabricant du composant à rajouter une telle mémoire Flash dans son composant, ce qui nécessite un conditionnement supplémentaire si la puce ne nécessitait pas de Flash à l'origine.

La présente invention vise donc à remédier aux inconvénients de cet art antérieur, en proposant un composant électronique apte à générer lui-même les clés secrètes nécessaires au fonctionnement des algorithmes de cryptographie qu'il va héberger.

Le composant électronique selon l'invention est destiné à mettre en oeuvre un algorithme cryptographique à clé secrète, il comporte un microprocesseur et des mémoires.

L'invention est défini dans les revendications annexées.

D'autres caractéristiques et avantages de la présente invention apparaîtront mieux à la lecture de la description qui suit de modes de réalisation de l'invention donnés à titre d'exemples non limitatifs. La description se réfère aux dessins annexés dans lesquels :
- la figure 1 est une vue simplifiée présentant un composant sécurisé selon l'invention ;
- la figure 2 est une vue schématique partielle du circuit générateur de clé de chiffrement selon un mode de réalisation de la présente invention ;
- la figure 3 est une représentation détaillée du circuit représenté à la figure 2 ;
- la figure 4 précise à travers différents chronogrammes le fonctionnement du circuit représenté à la figure 3 ;
- la figure 5 détaille l'application d'un composant sécurisé selon l'invention à un téléphone mobile ;
- la figure 6 précise un procédé de personnalisation d'un tel composant sécurisé selon l'invention;
- la figure 7 décrit une vue schématique partielle du circuit générateur de clé de chiffrement selon un autre mode de réalisation de la présente invention.

Seuls les éléments essentiels à la compréhension de l'invention ont été représentés sur les dessins. Pour en faciliter la lecture, les mêmes éléments portent les mêmes références d'une figure à l'autre.

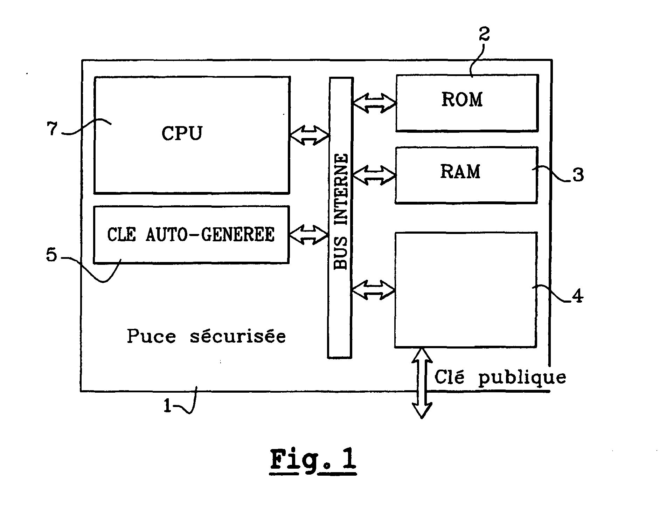

En se reportant à la figure 1, on a représenté de façon schématique un composant électronique selon l'invention. Ce composant est donc adapté à mettre en oeuvre un algorithme de cryptographie à clé secrète.

Le composant référencé 1 comprend, sous la forme d'un circuit intégré dans une puce de silicium, un microprocesseur CPU 7, une mémoire programme non volatile ROM 2 (Read Only Memory), une mémoire volatile de travail RAM 3 (Random Access Memory). Pour pouvoir utiliser le ou les algorithmes de chiffrement qu'ils soient de type symétrique et/ou asymétrique mémorisés en mémoire programme 2, le composant 1 dispose également de moyens 5 de génération d'un nombre formant la clé secrète IK (de l'anglais Initial Key).

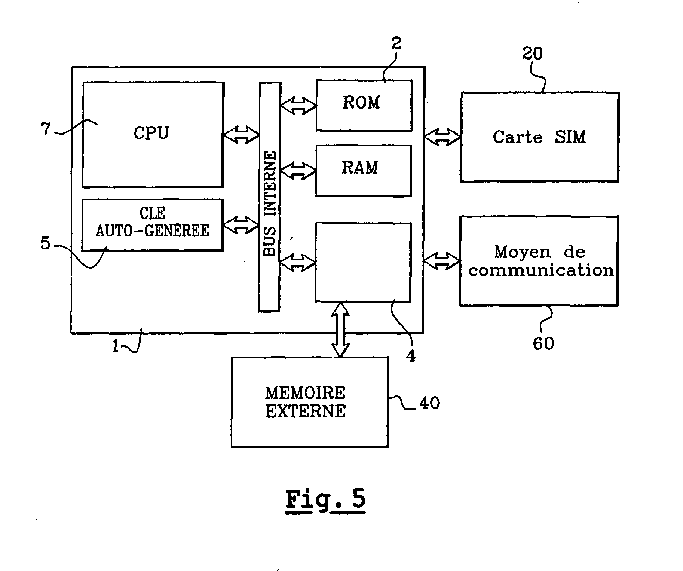

Par ailleurs, dans l'exemple illustré où le composant est destiné à coopérer en lecture/écriture avec une mémoire externe de type EEPROM 40 (Electrically Erasable Programmable Read Only Memory), cf. figure 5, via un bus de communication non figuré, le composant comporte également des moyens chiffreurs/déchiffreurs 4 destinés à chiffrer/déchiffrer respectivement les données émises/reçues de la mémoire 40 en utilisant un algorithme symétrique de type DES et la clé IK. L'emploi de tels moyens 4 réalisés sous la forme de logique câblée dédiés au chiffrement/ déchiffrement du bus de communication vers la mémoire 40 autorise des vitesses élevées de transfert de données.

Une telle mémoire externe 40 traditionnellement vulnérable est alors chiffrée par le composant 1 qui détient seul la clé de chiffrement. Le système constitué par le composant de chiffrement 1 et sa mémoire externe 40 forment ainsi une entité autonome parfaitement sécurisée.

La clé est systématiquement utilisée pour chiffrer les informations critiques lors d'une écriture mémoire et pour les déchiffrer lors d'une lecture. Le résultat du chiffrement est fonction de la clé de chiffrement, de la donnée et de son adresse mémoire. L'adresse ou le complément avec un nombre aléatoire doit, en effet, être utilisée pour éviter les attaques de substitutions.

Dans tous les cas, la clé ne doit pas être accessible. Pour cette raison, elle n'est pas accessible par le bus mémoire.

Un tel composant 1 peut être utilisé dans tout appareillage nécessitant une sécurisation des échanges de données et des stockages de données, tels que, par exemple et de façon non limitative, les terminaux de paiement, les téléphones mobiles, etc.

Conformément à l'invention, le composant 1 comporte donc des moyens 5 aptes à générer de façon non prévisible, c'est-à-dire parfaitement aléatoire a priori, un unique nombre IK qui servira, pendant toute la vie du composant 1, de clé secrète pour les différents algorithmes de chiffrement mis en oeuvre par ledit composant 1 qu'ils soient symétriques (type DES) ou asymétriques (type RSA), dans ce dernier cas la clé IK sert à fabriquer la paire de clés secrète Ks et publique Kp.

Selon une première approche, ce nombre IK peut être directement généré en utilisant des moyens générateurs de nombres aléatoires. Il est à noter que de tels moyens sont fréquemment utilisés par les algorithmes de cryptage. Il suffit de solliciter spécifiquement ces moyens de génération de nombres aléatoires, par exemple lors de commande initiale, pour générer un nombre aléatoire IK, puis de stocker ce nombre IK dans une mémoire permanente Flash du composant 1.

Selon une seconde approche, ce nombre IK peut être plus directement lié à la structure même du composant 1. L'invention réside alors dans la possibilité qu'il y a, malgré un masque de fabrication identique pour tous les composants, d'identifier des spécificités propres à chaque composant et d'en déduire une clé secrète IK pour chaque composant.

Ces spécificités servant de bases à l'élaboration de la clé secrète IK résultent principalement du processus de fabrication et plus précisément des dispersions de fabrication qui font qu'aucun composant n'est réellement identique à un autre.

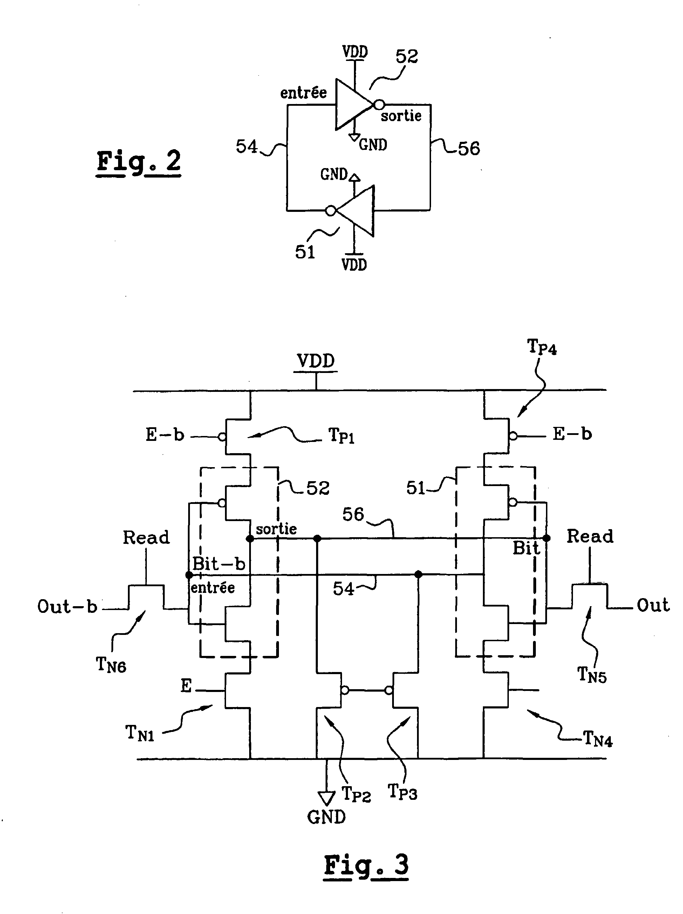

En se reportant aux figures 2 à 4, la description d'un mode de réalisation particulier fera mieux comprendre cette seconde approche.

Considérons une clé secrète IK dont la longueur est, par exemple, de 1024bit.

Cette clé est alors générée par un microcircuit réalisé essentiellement à base de transistors MOS réunis sous la forme d'une succession de couples d'inverseurs mis en opposition (tête-béche). Chaque couple d'inverseurs définit la valeur à "1" ou à "0" d'un bit de la clé. Ainsi le couple 51, 52 représenté à la figure 2 représente par exemple le n^{ième} bit de la clé IK, n appartenant à l'intervalle [0;1023].

Un inverseur est formé par le montage série d'un transistor NMOS et d'un transistor PMOS, le premier étant relié à la masse GND par sa source, GND représentant l'état logique "0", et le second étant relié à la tension d'alimentation +VDD par sa source, VDD représentant l'état logique "1". Les Portes de deux transistors sont connectées et définissent l'entrée de l'inverseur, tandis que la sortie de l'inverseur est définit par la jonction des deux drains des transistors. Un transistor NMOS est passant lorsque sa Porte est à "1" alors que qu'un transistor PMOS est passant lorsque sa Porte est à "0". Il en résulte que lorsque l'entrée de l'inverseur 51 est "0", sa sortie est à "1" et inversement.

Lorsque deux inverseurs sont mis en opposition, selon le schéma de la figure 2, et que l'on applique une tension d'alimentation (+VDD) à chacun des deux inverseurs 51 et 52, alors les potentiels à la sortie des inverseurs 51 et 52 basculent rapidement l'un vers GND, l'autre vers +VDD de sorte qu'un état stable s'établit dans chacune des deux branches 54 et 56, état qui va être respectivement "0" et "1" ou bien l'inverse "1" et "0".

Le fait pour les inverseurs de basculer vers un potentiel ou l'autre est fonction du potentiel de départ (charges sur les grilles), de la force relative des inverseurs, c'est à dire du courant de charge (rapport W/L : largeur/ longueur du canal d'un transistor MOSFET), et de la capacité relative des entrées et sorties.

Avec un tel montage, la valeur obtenue en sortie des deux inverseurs 51 et 52, "0" ou "1", dépend donc de leurs caractéristiques respectives et ne peut être déterminée à priori. Donc, en partant d'un potentiel égal aux deux entrées, le potentiel final aux sorties des inverseurs est une donnée aléatoire qui dépend des seules dispersions du processus de fabrication. Il ne suffit plus que de prendre la valeur de sortie de l'un des deux inverseurs comme valeur du n^{ième} bit de la clé IK. Il apparaît ainsi clairement que grâce à un tel circuit il est possible de fabriquer une clé IK parfaitement aléatoire.

En se reportant à la figure 3, on a précisé un mode de réalisation possible du montage schématique de la figure 2. Les deux inverseurs 51 et 52 sont connectés respectivement à la masse GND et à la tension +VDD par une série de transistors NMOS : TN1 et TN4 et par des transistors PMOS : TP1 et TP4. En appliquant un signal E (de l'anglais Enable) égal à "0" sur les Portes des transistors TN1, TN4 et un signal E_b égal à "1" sur les Portes des transistors TP1 et TP4, les signaux d'entrée des inverseurs 51 et 52 sont remis à zéro et les inverseurs sont désactivés. Par ailleurs, les connexions 54 et 56 sont connectées à la masse GND par l'intermédiaire de transistors PMOS respectivement TP3 et TP2 pilotés par le signal E appliqué à leur Porte. Ainsi lorsque le signal E vaut "0", les valeurs de tension respectivement BIT et BIT_b des deux branches 56 et 54 et donc les entrées des deux inverseurs 52 et 51 sont ramenées à "0".

Les valeurs BIT et BIT_b des branches 54 et 56 respectivement OUT et OUT_b sont lues aux moyens de transistors NMOS respectivement TN6 et TN5 pilotés par un signal READ alimentant leur Porte respective. La mise en place des deux transistors TN5 et TN6 permet de garder la symétrie du montage et donc de ne pas favoriser un inverseur par rapport à l'autre du fait d'une différence des capacités.

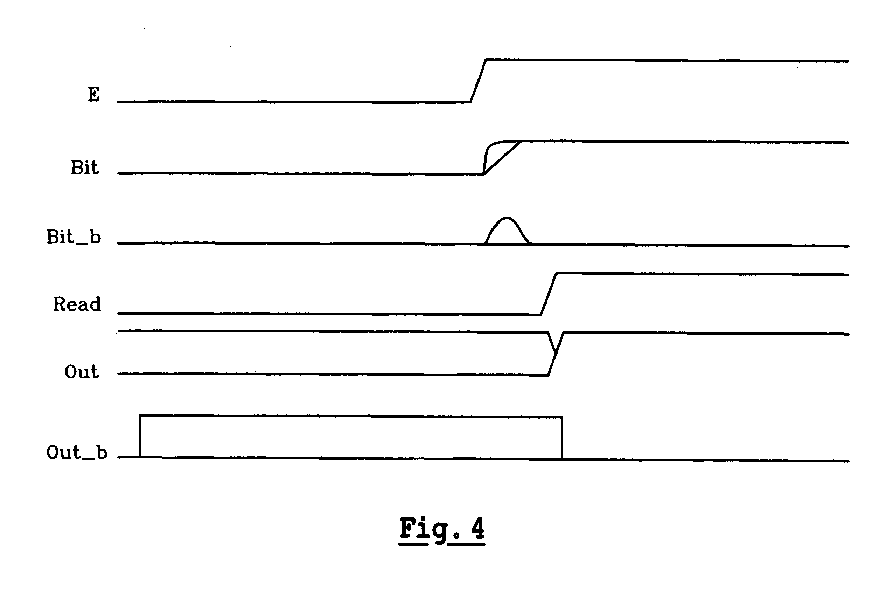

Le processus de lecture de valeur du n^{ième} bit de la clé IK, définit par exemple par la valeur du signal OUT, est détaillé à la figure 4. On fait basculer le signal E (Enable) à la valeur "1" pour donner l'ordre de lecture. Lorsque E est haut, les PMOS TP2 et TP3 reliant les entrées des inverseurs à GND sont désactivés, les NMOS TN1, TN4 ainsi que les PMOS TP1 et TP4 sont activés et donc les inverseurs 51 et 52 sont activés. L'inverseur le plus fort des deux, l'inverseur 52 en l'espèce, va alors faire basculer son potentiel d'entrée vers "1" (+VDD) et donc son potentiel de sortie vers "0" (GND). Une fois le potentiel stabilisé dans les lignes 54 et 56, on peut effectuer une lecture de la valeur du signal OUT ("0" ou " 1 ") en élevant le potentiel du signal READ à "1". Ainsi, en l'espèce le n^{ième} bit de la clé IK vaut "1".

Ce processus est parfaitement répétitible, et permet ainsi au composant de disposer en permanence de sa clé IK sans avoir besoin de mémoire Flash pour la conserver.

L'invention réside donc dans la possibilité de disposer dans les paires d'inverseurs, d'un inverseur plus fort que l'autre pour toujours amener le même équilibre de tension lors de la phase de lecture, tout en rendant le choix de l'inverseur le plus fort dans la paire, aléatoire a priori. Cela est possible du seul fait du processus de fabrication d'un tel circuit.

Le processus de fabrication d'un tel circuit est basé sur le gravage de transistors dans une couche de silicium. On a vu ci-dessus que le fait pour un inverseur de basculer vers un potentiel ou l'autre, est fonction du potentiel de départ (charges sur les grilles), du courant de charge de chaque inverseur (choix des dimensions W/L : largeur/ longueur du canal d'un transistor MOSFET) et de la capacité relative des entrée et sortie. La différenciation des inverseurs peut donc être réalisée en modifiant les paramètres courant de charge et capacité des sorties et ce, en générant des erreurs dues au positionnement des masques et/ou à la pureté ou dopage du substrat et/ou à la dispersion des dopeurs et/ou encore à la proximité des MOSFET sur le silicium (symétrie du montage), etc.

Des mesures en terme de processus de fabrication peuvent donc être facilement prises pour augmenter les variances entre les inverseurs. Ceci peut se faire en amplifiant certains paramètres qui nuisent à l'homogénéité des transistors. Parmi ces paramètres on peut citer :
- l'effet substrat (gamma) qui agit directement sur la tension de seuil Vt donc sur une conduction prématurée du transistor, car il injecte des charges sur le canal ;
- la conduction sous le seuil : c'est à dire qu'il y a conduction (alors que cela n'était pas prévu) ou inversement le MOS est Off :
   - premier cas favorable à cette conduction parasite : MOS à substrat moins dopé ;
   - deuxième cas : MOS à canal court.
- l'effet des porteurs chauds : ils impliquent une augmentation de Vt. Surtout applicable au canal court (L petit) ;
- le processus de fabrication : Une méthode de fabrication des MOS consiste à déposer l'oxyde, puis la Porte (aluminium ou polysilicium), et ensuite à doper le substrat (par ex : zone N pour un NMOS). Ceci permettant d'avoir, chose importante, une très bonne symétrie des dopages par rapport à la Porte, donc des caractéristiques maîtrisées pour le transistor. Par contre si on dope le substrat et qu'ensuite on dépose la Porte, on ne maîtrise pas les symétries. Les recouvrements entre la porte et les zones dopées sont alors fonction des dispersions dues à la techno utilisée (ex : photolithographie). Dans ce cas, la variation des capacités de recouvrement et la variation de la largeur du transistor (L) modifient la tension de seuil Vt.

Ces différentes méthodes permettent toutes d'augmenter la variance des forces des inverseurs, elles peuvent donc être utilisées chacune séparément ou en combinaison.

Il est à noter que la différence entre inverseurs doit être suffisamment forte pour que le résultat final soit répétitible et ne soit pas facilement perturbé par d'éventuels parasites. En effet, lorsque les caractéristiques des inverseurs sont par trop similaires, le résultat obtenu à la suite d'une lecture peut varier dans le temps. D'autre part pour éviter toute perturbation de la lecture par des parasites provenant de l'alimentation (+VDD), celle-ci doit être filtrée correctement (bandgap).

Pour se prémunir contre la réalisation d'un couple d'inverseurs insuffisamment différentiés, dans la mesure où le processus de fabrication ne pourrait garantir cette différentiation nette à tout coup, il peut être envisagé en variante de réalisation de prévoir un plus grand nombre de couple d'inverseurs que de bits nécessaires à la clé secrète IK, de tester chaque couple sur un nombre prédéterminé N (par exemple égale à 30) de lectures et de ne conserver que les couples d'inverseurs qui ont eu un même résultat lors de ces N lectures.

Pour mettre en oeuvre ce système, le microcircuit comprendra donc un nombre Q plus important de couples d'inverseurs que le nombre P de bits nécessaires à réaliser la clé de chiffrement et de choisir, après les avoir testées, parmi ces Q couples, P couples stables. La position de ces P couples pourra être codée dans une mémoire externe permanente non chiffrée. Lors des utilisations ultérieures, seuls les couples correspondant aux positions codées dans cette mémoire seront lus pour obtenir la clé de chiffrement.

Le microcircuit 5, illustré de façon partielle à la figure 3, par lequel est créée la clé IK se limite donc tout au plus à quelques milliers de transistors. Son coût est donc sans commune mesure avec celui d'une étape de personnalisation.

Grâce aux moyens 5 de génération d'une clé IK, il devient notamment possible de proposer un stockage sécurisé des données sans avoir à personnaliser la puce et en utilisant des mémoires standards du commerce, d'où une réduction important du coût de la fonction.

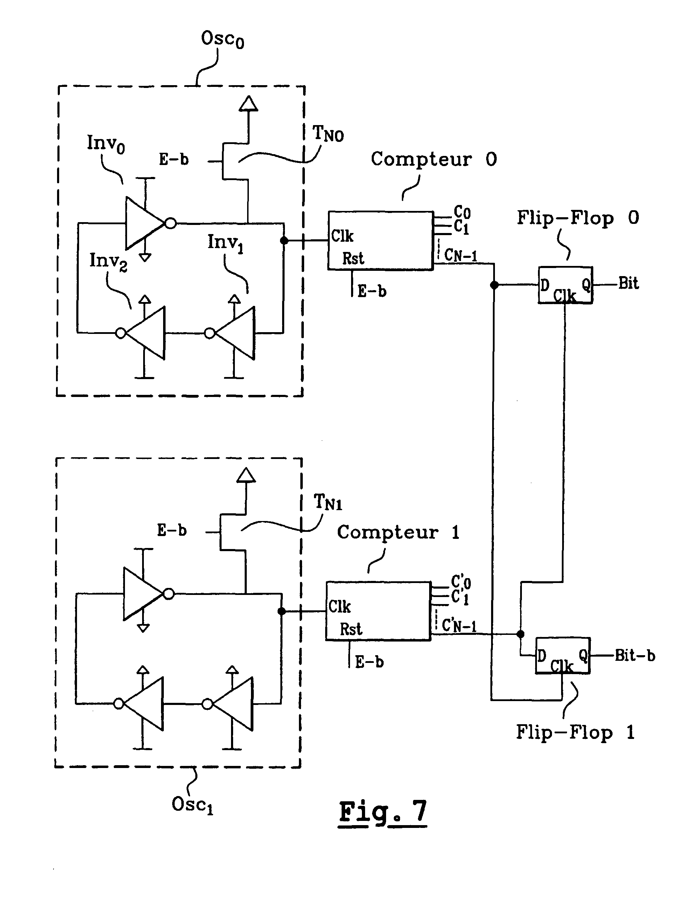

D'autres méthodes de génération de la clé IK, reprenant le principe de la dispersion et des différences entre inverseurs peuvent être envisagées. La figure 7 illustre un exemple d'une telle méthode. Un oscillateur peut être formé par une succession d'un nombre impair de transistors (trois sur la figure). La fréquence d'oscillation de cet oscillateur dépend de la force des inverseurs le composant.

On peut donc envisager de comparer la fréquence de deux oscillateurs, Osc0 et Osc1, pour générer un "1" ou un "0" suivant les résultats de la comparaison. Pour cela on impose un état identique aux deux oscillateurs Osc0 et Osc1 grâce à un signal E_b et aux transistors TN0 et TN 1. Le signal E_b sert aussi à remettre à zéro les compteurs Compteur0 et Compteur1. Lorsque E bascule vers "1", les oscillateurs commencent à osciller. Chaque compteur est incrémenté pour chaque oscillation de son oscillateur associé. Il s'ensuit que l'oscillateur le plus rapide incrémentera son compteur plus vite et forcera donc le signal correspondant au n^{ième} bit du compteur vers "1" le premier. Ce signal plus rapide (C_{N-1} ou C'_{N-1} suivant que ce soit Osc0 ou Osc1 qui est le plus rapide) est connecté à l'entrée Clk d'un flip-flop. Il forcera donc sa sortie Q vers "0" (valeur du signal le plus lent). Par la suite le signal le plus lent, connecté à l'entrée Clk de l'autre flip-flop, forcera la sortie Q de ce dernier vers "1" (valeur du signal le plus rapide). Ainsi la valeur Bit sera égale à 1 si Osc0 est plus rapide et à "0" dans le cas contraire. Il est important d'avoir 2 flip-flops pour des raisons de symétrie.

Dans ce mode de réalisation, les couples d'oscillateurs Osc0 et Osc1 seront sélectionnés en fonction de leurs écarts relatifs. Les compteurs associés à ces oscillateurs sont lus en fin de comptage et les valeurs extraites de ces compteurs permettent de calculer un rapport R qui n'est que la division de la valeur la plus petite par la plus grande. Seuls les couples qui ont rapport R supérieur à une valeur prédermininée seront retenus dans le calcul de la clé secrète finale. Les couples sélectionnés peuvent être stockées en mémoire non-volatile et non chiffré externe afin de ne retenir lors des démarrages du composant sécurisé que les couples qui ont une dispersion suffisante pour éviter toute dérive du procédé dans le temps. Le stockage des couples sélectionnés en mémoire externe non-protégée ne renseigne en rien sur la valeur des compteurs et de facto sur la valeur de la clé secrète.

La figure 5 illustre une application d'un tel composant sécurisé dans un terminal tel qu'un terminal téléphonique mobile de type GSM. Bien évidemment les applications d'un tel composant ne sont pas limitées aux téléphones mobiles mais concernent une large gamme de terminaux tels que notamment les lecteurs de cartes bancaires, les baladeurs MP3, les téléphones publics, les horodateurs, etc.

Une des applications possibles d'un tel composant sécurisé 1 dans un téléphone mobile peut être la lecture de fichiers musicaux au format MP3, ou bien encore la lecture de fichiers vidéo, etc. Compte tenu de la taille de ces fichiers l'accès par un bus mémoire autorise une bande passante sans commune mesure avec celle offerte par la carte SIM 20 du téléphone. Il est donc important d'exploiter de telles données par le composant 1. Ce dernier est alors adapté pour échanger de données chiffrées avec l'extérieur et possède donc un algorithme de cryptographie asymétrique de type RSA et des moyens appropriés pour transformer la clé IK en un couple de clé secrète Ks et de clé publique Kp

Le composant 1 complète la carte SIM 20 dont le rôle principal est de permettre au possesseur du téléphone de garder tous ses privilèges (accès à un réseau de radio-télécommunication, répertoire téléphonique, paramètres des services divers auxquels le porteur de la carte SIM s'est abonné) lorsqu'il décide de changer d'appareil, il lui suffit juste de réutiliser sa carte SIM 20.

Lorsque l'utilisateur souhaite télécharger des fichiers musicaux sur son téléphone, il se connecte à un site approprié en utilisant les moyens de communication 60 de son téléphone et les données de sa carte SIM 20. Au site approprié, la carte SIM 20 fournit le certificat du composant 1 conformément au mécanisme dit PKI (Public Key Infrastructure). Ce certificat émis par une autorité dûment appropriée garantit l'authenticité du composant 1 et fournit la clé publique Kp qui va servir au chiffrement du fichier envoyé par le site au téléphone. Ce fichier va donc être téléchargé chiffré dans le téléphone et mémorisé chiffré dans la mémoire externe 40 du composant 1. Seul un signal analogique sortira du composant 1 lorsque l'utilisateur souhaitera écouter ledit fichier.

Bien évidemment le composant 1 et la carte SIM 20 s'échangent leurs clés publiques respectivement Kp et Kp' lors d'une étape d'initialisation afin d'établir des sessions d'échanges d'informations totalement sécurisées. Toute communication entre la carte SIM 20 et le composant 1 peut s'effectuer de manière chiffrée grâce aux deux clés publiques, Kp et Kp'.

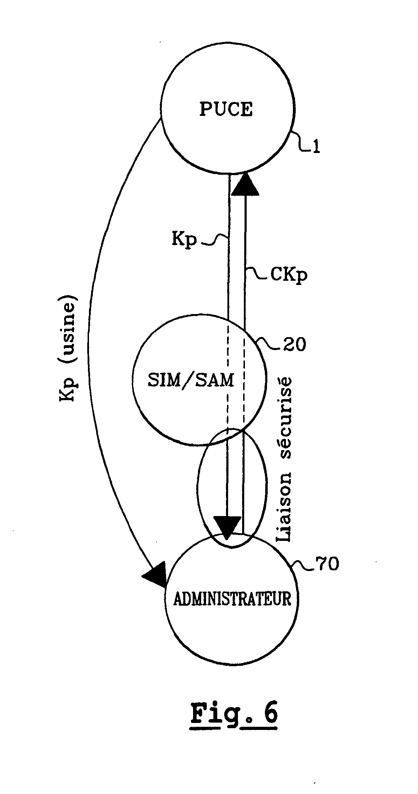

La figure 6 illustre la façon dont on peut affecter un certificat d'authentification au composant 1.

Pendant le déroulement du processus de fabrication et lors d'une mise sous tension du composant 1, notamment lors d'une opération de test en fin de chaîne, le composant 1 génère sa clé IK et par conséquent sa paire de clés sécrète Ks et publique Kp, cette dernière clé publique Kp étant alors lue et stockée dans une base de données sécurisée et appropriée destinée à une autorité de contrôle et de certification 70.

Lors de la première session de communication entre le composant 1 et une carte SIM 20 (le jour de l'achat du téléphone mobile et de la mise en place de la carte SIM par exemple), le composant 1 transmet sa clé publique Kp à la carte SIM 20 qui la stocke dans une mémoire Flash. La carte SIM 20 vérifie ensuite l'authenticité de cette clé Kp en initiant une communication sécurisée en utilisant sa propre clé publique Kp' et son propre certificat d'authenticité avec l'autorité de certification 70. Si effectivement la clé Kp est référencée par l'autorité de certification 70 alors cette dernière renvoie le certificat correspondant, lequel est transmis par la carte SIM 20 au composant 1 ainsi que sa propre clé publique Kp'.

Une fois le certificat de la clé publique Kp' de la carte SIM 20 transmis et stocké dans la mémoire sécurisée par le composant 1 alors la sécurisation de l'ensemble utilise des principes standards basés sur des infrastructures de type PKI.

Les données sensibles sont sécurisées par le chiffrement effectué par le codeur 4 du composant 1. Seule le composant 1 est capable de déchiffrer son bus de données. En aucun cas, la clé IK auto-générée par le composant 1 ne sortira de celui-ci. Pour assurer cela, les opérations de sélection des bits valides de la clé ainsi que le calcul de la clé publique et secrète à partir de la clé auto-générée, sont effectuées dans le composant à partir des mémoires ROM 2 et RAM 3 internes.

Les clés publique et privée servant à l'authentification de la puce seront stockés en flash externe de manière cryptée. Seules certaines fonctionnalités sécurisées auront accès à la lecture de ces clés. Les autorisations d'accès seront obtenues hiérarchiquement en commençant par le "boot" primaire c'est-à-dire par le programme de chargement. L'accès à cette partie de la mémoire sera limité directement par la MPU (Memory Protection Unit) c'est-à-dire par le mécanisme de protection matérielle d'accès à la mémoire.

Les composants logiciels chargés, y compris l'OS (Operating System), sont signés par une autorité, le composant vérifie la cohérence et l'authenticité de ces applications grâce à ces signatures digitales. Les principes utilisés sont classiques en cryptographie (MD5, SHA-1, RSA ou DES).

## Revendications

1. Composant électronique (1) destiné à mettre en oeuvre un algorithme cryptographique à clé secrète (IK), du type comportant un microprocesseur (7), des mémoires (2,3), et des moyens (5) permettant de générer seuls ladite clé secrète (IK), **caractérisé en ce que** lesdits moyens (5) générateurs de clé secrète (IK) comprennent des moyens de mesures de paramètres physiques appropriés coopérant avec tout ou partie des circuits électroniques dudit composant (1) et des moyens de traitement des valeurs ainsi mesurées pour en déduire ladite clé secrète (IK), lesdits circuits et lesdits paramètres physiques mesurés étant choisis de façon à fournir des valeurs distinctes et aléatoires d'un composant à l'autre du fait de la naturelle dispersion de fabrication desdits circuits, lesdits moyens (5) générateurs de clé secrète (IK) comportant des moyens oscillateurs (Osc0, Osc1) dont la fréquence est dépendante du procédé de fabrication, lesdites fréquences constituant ainsi des paramètres physiques appropriés, lesdits moyens (5) générateurs de clé secrète (IK) comportant également des moyens permettant de comparer ces fréquences, ladite comparaison permettant de générer un 0 ou un 1 pour chaque couple d'oscillateurs (Osc0, Osc1), selon que l'un des oscillateurs (Osc0) est plus rapide ou plus lent que l'autre oscillateur (Osc1).

2. Composant électronique (1) selon la revendication I, un compteur (compteur0, compteur1) étant associé à chaque oscillateur (Osc0, Osc1), les valeurs extraites des compteurs permettant de calculer pour chaque couple d'oscillateurs (Osc0, Osc1) un rapport (R) correspondant à la division de la valeur la plus petite par la plus grande des valeurs des compteurs (compteur0, compteur1) du couple, seuls les couples qui ont rapport (R) supérieur à une valeur prédéterminée étant retenus dans le calcul de la clé secrète (IK).

3. Composant électronique (1) destiné à mettre en oeuvre un algorithme cryptographique à clé secrète (IK), du type comportant un microprocesseur (7), des mémoires (2,3), et des moyens (5) permettant de générer seuls ladite clé secrète (IK), **caractérisé en ce que** lesdits moyens (5) générateurs de clé secrète (IK) comprennent des moyens de mesures de paramètres physiques appropriés coopérant avec tout ou partie des circuits électroniques dudit composant (1) et des moyens de traitement des valeurs ainsi mesurées pour en déduire ladite clé secrète (IK), lesdits circuits et lesdits paramètres physiques mesurés étant choisis de façon à fournir des valeurs distinctes et aléatoires d'un composant à l'autre du fait de la naturelle dispersion de fabrication desdits circuits, le composant comportant un circuit électronique spécifique coopérant avec lesdits moyens de mesure, ledit circuit électronique étant constitué essentiellement de transistors, ledit circuit étant formé par une série de paire d'inverseurs (51, 52) montés en opposition, les grandeurs physiques mesurées étant les tensions à l'entrée d'un des deux inverseurs de chacune desdites paires, chacun desdits inverseurs (51, 52) de chacune desdites paires possédant des caractéristiques spécifiques non homogènes et rendues aléatoires du fait de la naturelle dispersion de fabrication desdits circuits.

4. Composant électronique (1) selon la revendication 3, **caractérisé en ce que** la non-homogénéité des inverseurs concerne plus particulièrement le courant de charge et/ou la capacité relative des entrée et sortie.

5. Composant électronique (1) selon l'une des revendications 3 à 4, comprenant un plus grand nombre de couples d'inverseurs que de bits nécessaires à la clé secrète, et des moyens pour tester chaque couple sur un nombre prédéterminé (N) de lectures et ne conserver pour le calcul de la clé que des couples d'inverseurs qui ont eu un même résultat lors de ce nombre prédéterminé (N) de lectures.

6. Composant électronique (1) selon l'une quelconque des revendications précédentes, **caractérisé en ce que** qu'il comporte des moyens chiffreurs/déchiffreurs (4) coopérant avec une mémoire externe (40).

7. Composant électronique (1) selon la revendication 6, **caractérisé en ce que** lesdits moyens chiffreurs/déchiffreurs sont formés par un microcircuit spécifique réalisé en logique câblée (4).

8. Composant électronique (1) selon l'un quelconque des revendications précédentes, **caractérisé en ce que** ladite clé secrète (IK) coopère avec des moyens de calcul appropriés pour générer les clés publiques (Kp) et secrète (Ks) d'un algorithme de cryptographie asymétrique.

9. Composant électronique (1) selon la revendication 8, **caractérisé en ce que** ladite clé publique (Kp) est communiquée à une autorité de contrôle afin de pouvoir s'authentifier et s'intégrer à un dispositif d'échange de données sécurisé de type PKI,

10. Composant électronique selon l'une quelconque des revendications précédentes, **caractérisé en ce qu'**il est formé d'un microcircuit sous forme d'une puce électronique.

## Patentansprüche

1. Elektronisches Bauteil (1) zur Umsetzung eines Verschlüsselungsalgorithmus mit Geheimschlüssel (IK), das einen Mikroprozessor (7), Speicher (2, 3) und Mittel (5) zur eigenständigen Erzeugung des besagten Geheimschlüssels (IK) enthält und **dadurch gekennzeichnet ist, dass** die besagten Mittel (5) zur Erzeugung des Geheimschlüssels (IK) Mittel für die Messung von geeigneten physikalischen Parametern enthalten, die ganz oder teilweise mit den elektronischen Schaltkreisen des besagten Bauteils (1) und der Mittel zur Verarbeitung der gemessenen Werte kooperieren, um daraus den besagten Geheimschlüssel (IK), die besagten Schaltkreise sowie die besagten physikalischen Messwerte abzuleiten, wobei letztere so ausgewählt wurden, dass aufgrund der natürlichen Fertigungsstreuung der Schaltkreise von einem Bauteil zum anderen verschiedene und zufällige Werte geliefert werden und die Mittel (5) zur Erzeugung des Geheimschlüssels (IK) Oszillatormittel (Osc0, Osc1) enthalten, deren Frequenz vom Herstellungsverfahren abhängt, wodurch die besagten Frequenzen somit geeignete physikalische Parameter darstellen. Die besagten Mittel (5) zur Erzeugung des Geheimschlüssels (IK) enthalten zudem Mittel, die den Vergleich dieser Frequenzen ermöglichen, wobei bei dem Vergleich für jedes Oszillatorenpaar (Osc0, Osc1) eine 0 oder eine 1 erzeugt werden kann, je nachdem, ob einer der Oszillatoren (Osc0) schneller oder langsamer als der andere Oszillator (Osc1) ist.

2. Elektronisches Bauteil (1) nach Anspruch I, wobei jeder Oszillator (Osc0, Osc1) mit einem Zähler (Zähler0, Zähler1) verknüpft ist und die aus den Zählern extrahierten Werte für jedes Oszillatorenpaar (Osc0, Osc1) die Berechnung eines Verhältnisses (R) ermöglichen, welches der Division des kleinsten Wertes durch den größten Wert des Zählerpaares (Zähler0, Zähler1) entspricht, wobei nur die Paare zur Berechnung des Geheimschlüssels (IK) berücksichtigt werden, dessen Verhältnis (R) größer als ein vorgegebener Wert ist.

3. Elektronisches Bauteil (1) zur Umsetzung eines Verschlüsselungsalgorithmus mit Geheimschlüssel (IK), das einen Mikroprozessor (7), Speicher (2, 3) und Mittel (5) zur eigenständigen Erzeugung des besagten Geheimschlüssels (IK) enthält und **dadurch gekennzeichnet ist, dass** die besagten Mittel (5) zur Erzeugung des Geheimschlüssels (IK) Mittel für die Messung von geeigneten physikalischen Parametern enthalten, die ganz oder teilweise mit den elektronischen Schaltkreisen des besagten Bauteils (1) und der Mittel zur Verarbeitung der gemessenen Werte kooperieren, um daraus den besagten Geheimschlüssel (IK), die besagten Schaltkreise sowie die besagten physikalischen Messwerte abzuleiten, wobei letztere so ausgewählt wurden, dass aufgrund der natürlichen Fertigungsstreuung der Schaltkreise von einem Bauteil zum anderen verschiedene und zufällige Werte geliefert werden. Das Bauteil enthält einen spezifischen elektronischen Schaltkreis, der mit den Messmitteln kooperiert und der besagte elektronische Schaltkreis besteht im Wesentlichen aus Transistoren. Der besagte Schaltkreis wird durch eine Serie aus entgegengesetzt montierten Inverterpaaren (51, 52) gebildet und die physikalischen Messgrößen sind die Spannungen am Eingang einer der beiden Inverter jedes Paares, wobei jeder Inverter (51, 52) eines jeden Paares spezifische, nicht homogene Eigenschaften besitzt, die aufgrund der natürlichen Fertigungsstreuung der besagten Schaltkreise zufällig sind.

4. Elektronisches Bauteil (1) nach Anspruch 3, **dadurch gekennzeichnet, dass** die Nichthomogenität der Inverter insbesondere den Ladestrom und/oder die relative Kapazität der Ein- und Ausgänge betrifft.

5. Elektronisches Bauteil (1) nach einer der Ansprüche 3 bis 4, das eine größere Anzahl an Inverter-Paaren als an für den Geheimschlüssel notwendige Bits sowie Mittel enthält, mit denen jedes Paar auf eine vorgegebene Anzahl (N) an Lesungen getestet wird, wobei für die Berechnung des Schlüssels nur die Inverter-Paare berücksichtigt werden, die das gleiche Ergebnis bei dieser vorgegebenen Anzahl (N) an Lesungen aufweisen.

6. Elektronisches Bauteil (1) nach einer der vorangehenden Ansprüche, **dadurch gekennzeichnet, dass** es Mittel zur Verschlüsselung/Entschlüsselung (4) enthält, die mit einem externen Speicher (40) kooperieren.

7. Elektronisches Bauteil (1) nach Anspruch 6, **dadurch gekennzeichnet, dass** die besagten Mittel zur Verschlüsselung/Entschlüsselung durch einen spezifischen Mikroschaltkreis aus verdrahteter Logik (4) gebildet werden.

8. Elektronisches Bauteil (1) nach einer der vorangehenden Ansprüche, **dadurch gekennzeichnet, dass** der besagte Geheimschlüssel (IK) mit Berechnungsmitteln kooperiert, die für die Erzeugung von öffentlichen Schlüsseln (Kp) und einem geheimen Schlüssel (Ks) mit einem asymmetrischen Verschlüsselungsalgorithmus geeignet sind.

9. Elektronisches Bauteil (1) nach Anspruch 8, **dadurch gekennzeichnet, dass** der besagte öffentliche Schlüssel (Kp) einer Kontrollbehörde mitgeteilt wird, um sich identifizieren zu können und in eine Vorrichtung zum sicheren Datenaustausch vom Typ PKI integriert werden kann.

10. Elektronisches Bauteil nach einer der vorangehenden Ansprüche, **dadurch gekennzeichnet, dass** es aus einem Mikroschaltkreis gebildet wird, der die Form eines elektronischen Chips aufweist.

## Claims

1. An electronic component (1) designed for the implementation of a cryptographic algorithm with a secret key (IK), of the type comprising a microprocessor (7), memories (2,3) and means (5) that make it possible to generate said secret key (IK) on their own, **characterised in that** said means (5) to generate the secret key (IK) comprise means to measure the appropriate physical parameter that cooperate with all or part of the electronic circuits of said component (1) and means to process the values measured **in that** way to deduct said secret key (IK) therefrom, wherein said circuits and said physical parameters measured are selected so as to provide distinct and random values from one component to another because of the natural dispersion of manufacturing of said circuits, wherein said means (5) to generate the secret key (IK) comprise oscillator means (Osc0, Osc1), the frequency of which is dependent on the manufacturing process, wherein said frequencies thus constitute appropriate physical parameters, wherein said means (5) for generating the secret key (IK) also comprise means that make it possible to compare those frequencies, wherein said comparison makes it possible to generate a 0 or a 1 for each pair of oscillators (Osc0, Osc1), depending on whether one oscillator (Osc0) is faster or slower than the other oscillator (Osc1).

2. An electronic component (1) according to claim I, wherein a counter (compteur0, compteur1) is associated with each oscillator (Osc0, Osc1), and the values extracted from the counters make it possible to calculate, for each pair of oscillators (Osc0, Osc1) a ratio (R) equal to the division of the smaller value by the larger value of the counters (compteur0, compteur1) of the pair, wherein only pairs with a ratio (R) greater than a predetermined value are selected for calculating the secret key (IK).

3. An electronic component (1) designed for the implementation of a cryptographic algorithm with a secret key (IK), of the type comprising a microprocessor (7), memories (2,3) and means (5) that make it possible to generate said secret key (IK) on their own, **characterised in that** said means (5) to generate the secret key (IK) comprise means to measure the appropriate physical parameters that cooperate with all or part of the electronic circuits of said component (1) and means to process the values measured **in that** way to deduct said secret key (IK) therefrom, wherein said circuits and said physical parameters measured are selected so as to provide distinct and random values from one component to another because of the natural dispersion of manufacturing of said circuits, wherein the component comprises a specific electronic circuit that cooperates with said measurement means, wherein said electronic circuit is essentially made of transistors, wherein said circuit is formed by a series of inverter pairs (51, 52) mounted in opposition, wherein the physical values measured are tensions at the input of one of the two inverters of each of said pairs, wherein each of said inverters (51, 52) of said pairs has specific non-homogeneous specific characteristics that are made random by the natural dispersion of manufacturing of said circuits.

4. An electronic circuit (1) according to claim 3, **characterised in that** the non-homogeneity of the inverters particularly concerns the charge current and/or the relative capacity of the input and output.

5. An electronic circuit (1) according to any of claims 3 to 4, comprising a larger number of inverter pairs than bits required for the secret key, and means to test each pair over a predetermined number (N) of readings and to retain for calculating the key only the inverter pairs that have had the same result during the predetermined number (N) of readings.

6. An electronic component (1) according to any of the foregoing claims **characterised in that** it comprises encrypting/decrypting means (4) cooperating with an external memory (40).

7. An electronic component (1) according to claim 6, **characterised in that** said encryption/decryption means are formed by a special microcircuit made using wired logic (4).

8. An electronic component (1) according to any of the foregoing claims, **characterised in that** the secret key (IK) cooperates with appropriate calculation means for generating the public keys (Kp) and the secret key (Ks) of an asymmetrical cryptography algorithm.

9. An electronic component (1) according to claim 8, **characterised in that** said public key (Kp) is submitted to a control authority in order to allow authentication and for integration into a secure data exchange device of the PKI type.

10. An electronic component according to any of the foregoing claims, **characterised in that** it is formed of a microcircuit in the form of an electronic chip.
